# FASCICULE DE BREVET EUROPEEN

(11) **EP 1 574 144 B1**
(45) Date de publication et mention de la délivrance du brevet: **02.08.2006**
(21) Numéro de dépôt: 04014655.7
(22) Date de dépôt: 23.06.2004
(51) Int. Cl.: A43B 5/04, A43B 5/16, B29D 31/518

(54) **Chaussure de sport avec décoration**
Sportschuh mit Dekoration
Sports shoe with decoration

(30) Priorité: 11.03.2004 CH 4192004
(43) Date de publication de la demande: 14.09.2005
(73) Titulaire: LANGE INTERNATIONAL S.A., 1700 Fribourg (CH)
(72) Inventeur: Cagliari, Peter, 31044 Montebelluna / TV (IT)
(74) Mandataire: Bugnion Genève

(56) Documents cités:
- EP-A- 1 444 908
- FR-A- 2 847 433
- US-A- 3 568 339
- US-A- 4 096 650
- US-A1- 2003 084 595

## Description

L'invention concerne tout ou partie d'une chaussure de sport comprenant une décoration, et est particulièrement adaptée aux chaussures pour planche de glisse telle que ski, surf ou chaussure de patinage, qui sont utilisées dans des environnements abrasifs et subissent des efforts importants lors de leur utilisation. Elle concerne de plus aussi le procédé de fabrication d'une telle chaussure.

Les sports de glisse impliquent des contraintes contradictoires concernant la structure des chaussures. D'une part, elles doivent présenter des éléments rigides permettant à l'utilisateur de guider de manière précise l'engin de glisse et de ressentir la réponse de l'engin à ses sollicitations. D'autre part, elles doivent présenter des éléments souples assurant le confort en répartissant, de la manière la plus homogène possible, la pression de contact autour des pieds et des jambes de l'utilisateur. Pour cela, une solution de l'art antérieur consiste à fabriquer la chaussure selon un procédé de bi-injection, ce qui permet l'utilisation complémentaire et combinée de deux matériaux de caractéristiques mécaniques différentes, l'épaisseur et la rigidité de chaque matériau par exemple étant prévues sur la chaussure en fonction des contraintes mécaniques et des contraintes de confort. Cette solution permet aussi d'optimiser la quantité de matière nécessaire en tout endroit de la chaussure et d'optimiser le poids global de la chaussure. Cette structure en deux matériaux bi-injectés répond bien aux exigences de rigidité et de confort.

Les chaussures précédentes de l'art antérieur présentent toutefois une modeste décoration, souvent limitée à l'effet provoqué par l'association des deux couleurs différentes des deux matériaux mentionnés ci-dessus, du fait des contraintes suivantes :
- la chaussure est destinée à un environnement abrasif et à une utilisation sportive entraînant des efforts importants subis par sa structure. Dans le cas du ski ou du surf, la chaussure est aussi soumise à des coups accidentels provoqués par les carres. Ces agressions extérieures rendent difficiles la disposition de décorations durables sur la chaussure ;
- en outre, la chaussure présente une surface complexe, non plane, ce qui ne favorise pas sa décoration ;
- la chaussure a de plus une structure complexe et coûteuse du fait des contraintes mécaniques et de confort rappelées au paragraphe précédent et il n'est pas économiquement envisageable d'augmenter son coût de manière significative pour une contrainte supplémentaire d'ordre esthétique ;
- la chaussure doit aussi avoir un poids minimal pour optimiser son rendement et son coût. Des solutions de décoration qui entraîneraient une augmentation du poids de la chaussure conviendraient donc mal.

EP-A-1 444 908 est un état de la technique au titre de l'article 54(3) CBE. Il dévoile une partie de chaussure injectée comprenant une décoration sous forme de nervures.

Un premier objet de la présente invention consiste à proposer une chaussure de sport comprenant une décoration, cette dernière étant éventuellement de grande taille, de forme quelconque, et pouvant comprendre un nombre important de couleurs, et étant résistante aux contraintes imposées par l'utilisation de la chaussure de sport et adaptée à la forme complexe de la surface de la chaussure.

Un second objet de la présente invention consiste à proposer une chaussure de sport avec décoration restant adaptée aux contraintes contradictoires de rigidité et de confort imposées par la pratique du sport.

Un troisième objet de la présente invention consiste à proposer une chaussure de sport avec décoration dont le poids reste minimal.

Un quatrième objet de la présente invention consiste à proposer une chaussure de sport avec décoration dont le procédé de fabrication est simple et le surcoût reste négligeable.

Selon le concept de l'invention, la chaussure de sport avec décoration est fabriquée sur la base du procédé de bi-injection de l'art antérieur et il est prévu de disposer une décoration entre les deux couches de la chaussure, la couche de surface étant placée sur la décoration afin de la protéger et étant transparente afin de la rendre visible.

Plus précisément, l'invention porte sur une chaussure de sport ou une partie de chaussure selon les revendications 1 et 19. La chaussure ou partie de chaussure comprend une partie de type coque ou manchette composée de deux couches de matériaux dont la combinaison permet de remplir une double fonction de rigidité et de confort de la partie de chaussure. Elle comprend une décoration disposée entre les deux couches, la seconde couche est transparente afin de laisser visible la décoration et la recouvre afin de la protéger des agressions extérieures.

Selon une première variante, la décoration peut être réalisée par tout moyen de marquage de la première couche de la partie de chaussure.

Selon une seconde variante, la décoration peut être réalisée sur un support, ce support étant ensuite disposé sur la première couche de la partie de chaussure.

Pour cela, un moyen adhésif léger peut être disposé entre le support de la décoration et la première couche, ou le support peut avoir des propriétés adhésives, ou la première couche de chaussure peut avoir un moyen adhésif, réalisé par des tétons par exemple.

Le support peut être le moyen adhésif lui-même ou être un autocollant ou être de type décalcomanie.

La chaussure de sport peut être une chaussure de ski, la partie de la chaussure étant la coque, par exemple en polyuréthane, et la décoration étant disposée sur les parties latérales de la coque.

En outre, la décoration peut être de type alphanumérique et/ou quadrichromique. Elle peut aussi contenir une information permettant la gestion de la chaussure de sport, par l'intermédiaire d'un code-barre par exemple.

L'invention porte aussi sur le procédé de fabrication d'une chaussure de sport selon la revendication 14. Le procédé comprend la fabrication d'une partie de la chaussure de type coque ou manchette par deux étapes distinctes d'injection de matériaux dont la combinaison permet de remplir une double fonction de rigidité et de confort. Le procédé comprend une étape intermédiaire consistant à disposer une décoration sur la surface de la partie obtenue après la première injection, cette décoration étant ensuite recouverte par un matériau transparent lors de la deuxième injection.

L'étape intermédiaire peut comprendre une étape consistant à positionner un support comprenant la décoration sur la surface de la première partie à l'aide d'un moyen adhésif.

L'étape intermédiaire peut aussi comprendre une étape consistant à enlever une feuille du support de décoration afin d'obtenir l'effet adhésif du moyen adhésif, ou à chauffer le support pour obtenir son effet adhésif.

L'étape intermédiaire peut consister en une étape de collage d'un autocollant, le support de décoration étant un autocollant.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 est une vue en perspective d'une chaussure selon l'invention ;
La figure 2 est une vue en coupe selon A-A de la chaussure de la figure 1.

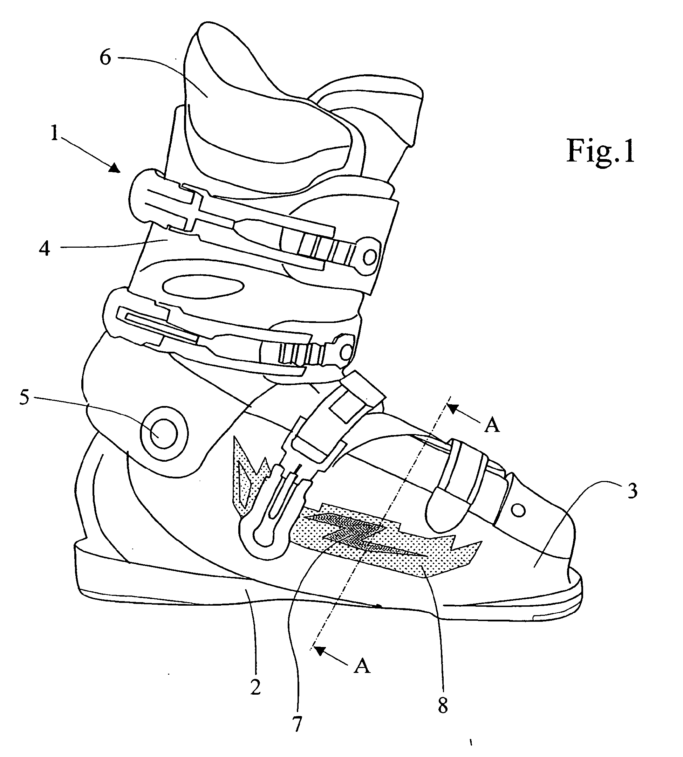

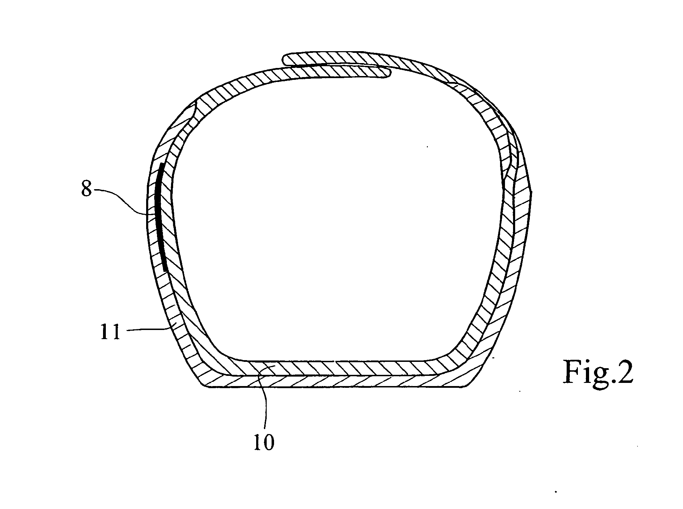

Le mode de réalisation décrit ci-après en référence aux figures 1 et 2 concerne une chaussure de ski 1 essentiellement constituée, d'une semelle 2, d'une coque 3, d'une manchette 4 articulée sur la coque 3 dans la région malléolaire en un point 5. Cette coque 3 et cette manchette 4 reçoivent un chausson de confort 6. La coque comporte une décoration 8.

La figure 2 montre en coupe la structure de la coque 3, qui contient un premier matériau, par exemple un polyuréthane relativement souple, formant une première couche 10 et un second matériau transparent, par exemple un polyuréthane plus rigide, formant une seconde couche 11. La décoration 8 est disposée entre les deux couches 10 et 11 et est visible depuis l'extérieur grâce à la transparence de la couche 11.

L'invention concerne en outre le procédé de fabrication de la chaussure de ski 1, qui est obtenue par les étapes essentielles suivantes :
- formation de la première couche 10 par une première étape d'injection de polyuréthane ;
- disposition de la décoration 8 sur la surface de la première couche 10 ;
- formation de la seconde couche 11 par une seconde étape d'injection de polyuréthane transparent, ce dernier recouvrant totalement la décoration 8.

La décoration 8 peut être réalisée sur la surface de la première couche 10 par un marquage à chaud, par sérigraphie, par tampographie, par des techniques de sublimation, ou par toute solution de marquage de l'art antérieur.

En variante, la décoration 8 peut être disposée sur un support 7 qui est directement placé sur la surface de la première couche 10 à l'aide d'un moyen adhésif.

Dans cette variante, le terme "moyen adhésif' est utilisé au sens large pour signifier tout moyen permettant une adhésion temporaire ou définitive du support 7 sur la couche 10. Ce moyen peut avoir un effet adhésif très léger et temporaire, car il n'est utile que pour maintenir le support 7 couche 10 pendant une durée très limitée, jusqu'à la réalisation de la seconde couche 11 transparente qui recouvre le support 7 peu de temps après son adhésion et remplit la fonction de maintien du support, rendant alors facultatif le rôle du moyen adhésif, tout en protégeant la décoration contre les agressions extérieures. Ainsi, ce moyen adhésif peut consister :
- en un moyen ajouté entre le support 7 et la couche 10 comme une colle, ou
- en un moyen découlant des propres propriétés du support 7 lui-même, soit obtenu directement du fait de sa nature soit obtenu en le soumettant à des conditions particulières, comme lors d'une soudure à chaud, par utilisation d'ultrason ou provocation d'électricité statique, ou
- en un moyen provenant de la couche 10 elle-même, comme des tétons prévus lors de son injection permettant l'emboîtement et l'adhésion du support de décoration.

Le support 7 de la décoration 8 est choisi peu épais et souple, en papier, en plastique ou en un élément collant naturel ou synthétique par exemple, de manière à pouvoir épouser la surface non plane de la première couche 10 de la coque 3. Le support 7 peut être une feuille, une encre ou un vernis de polyuréthane ou de même matériau que celui de la coque de la chaussure, ce qui présente l'avantage de faciliter le recyclage de la chaussure tout en permettant son adhésion simple et parfaite sur la première couche 10 par fusion par un moyen de chauffage. Le support 7 peut aussi être métallique, comme une feuille d'aluminium.

La décoration peut être obtenue très simplement par une impression sur un papier autocollant vierge à partir d'une imprimante d'ordinateur, ou par tout marquage existant. Elle peut aussi consister en un découpage donnant une forme particulière au support. Elle peut aussi être obtenue par des traitements chimiques comme l'anodisation d'une feuille d'aluminium, par la réalisation d'évidements et/ou de gravures dans une feuille d'aluminium par exemple.

Finalement, le support 7 de décoration 8 peut être un papier autocollant classique auquel cas il se composera d'une première face contenant la décoration et d'une seconde face comprenant le moyen adhésif recouvert par une feuille protectrice qui sera enlevée juste avant la disposition du support sur la première couche de la chaussure.

Le support 7 peut aussi être un vernis de polyuréthane recouvrant un marquage sur une feuille de support provisoire qui est enlevée au moment du dépôt du support à froid ou à chaud sur la première couche de la chaussure.

En variante, la décoration peut être disposée selon la méthode de la décalcomanie, qui consistera donc à appliquer le support sur la première couche de la chaussure en enlevant la feuille du dessus de la décoration.

Cette variante de réalisation consistant en une décoration préalablement disposée sur un support permet d'atteindre les avantages suivants :
- le procédé de fabrication d'une chaussure est très simplifié puisqu'il suffit de disposer la décoration à l'aide d'un moyen adhésif entre les deux étapes d'injection ;
- comme la décoration est réalisée sur un support simple et souple, il est possible de choisir des formes complexes quelconques pour ce support et par conséquent pour la décoration. De plus, la décoration peut recouvrir une surface de grande taille et de forme complexe de la chaussure car sa souplesse lui permet de s'adapter à la surface sur laquelle elle est disposée. Elle peut aussi comprendre tout type d'impression complexe de type alphanumérique ou quadrichromique, incluant des couleurs, des marquages, des hologrammes...Comme elle peut être réalisée très simplement, le procédé de fabrication de la chaussure est adapté aux petites séries.

Dans les variantes de réalisation précédentes, la décoration a été disposée sur la partie latérale de la coque de la chaussure. Toutefois, elle pourrait être disposée sur une autre surface de la coque 3 ou sur la manchette 4.

Le matériau utilisé pour la seconde couche peut être transparent ou de manière équivalente translucide.

De manière symétrique, le matériau de la première couche peut aussi être transparent, ce qui peut éventuellement créer un effet esthétique à l'intérieur de la chaussure et un effet esthétique différent depuis l'extérieur. Cette première couche remplit aussi une fonction complémentaire de protection de la décoration, vis à vis des possibles agressions provenant de l'intérieur de la chaussure.

Les deux couches mentionnées peuvent être en polyuréthane dont la rigidité est comprise entre 50 et 66 shd ou en tout autre matériau habituellement utilisé pour réaliser une partie de chaussure, et combinées afin de satisfaire aux exigences de confort et de rigidité. En variante, il est possible d'utiliser un matériau compatible avec des solutions de décoration par sublimation pour la première couche.

La décoration peut être plus qu'une simple décoration et contenir des informations utiles à la gestion des chaussures de sport pour les loueurs par exemple. Ainsi, la décoration peut être de type code-barre ou tout équivalent afin d'indiquer un numéro d'identification de la chaussure. Elle peut aussi permettre l'identification du loueur qui est propriétaire de la chaussure de sport. Cela peut lui permettre d'automatiser le procédé de location de chaussure par l'étape d'identification rapide de la chaussure, d'identifier les chaussures lui appartenant de manière sûre et simple.

Finalement, la solution atteint bien les objets mentionnés précédemment et présente les avantages suivants :
- comme la décoration est disposée entre deux couches de la chaussure, elle est maintenue en place et protégée des agressions extérieures ;
- l'invention ne nécessite aucune protection spécifique et supplémentaire à ajouter sur la coque pour protéger la décoration : elle se contente d'intégrer une décoration entre deux couches habituelles de la structure de la chaussure. Ainsi, les deux couches mentionnées remplissent leur fonction principale habituelle de confort et de rigidité de la chaussure. Selon l'invention, elles remplissent une troisième fonction de maintien et une quatrième fonction de protection de la décoration, sans nécessité de modification de ces couches, outre la transparence de la seconde couche ;
- du fait des explications précédentes, l'augmentation du poids et du coût de la chaussure selon l'invention par rapport à une chaussure sans décoration se limite simplement au poids et au coût de la décoration ajoutée, ce qui est négligeable.

## Revendications

1. Chaussure de sport (1) comprenant une partie de type coque (3) ou manchette (4) composée de deux couches (10. 11) de matériaux plastiques bi-injectés dont la combinaison permet de remplir une double fonction de rigidité et de confort de la partie de chaussure, et comprenant une décoration (8), cette décoration ne comportant pas des nervures de la première couche (10), disposée entre les deux couches (10, 11), la seconde couche (11) étant transparente afin de laisser visible la décoration et la recouvrant afin de la protéger des agressions extérieures.

2. Chaussure de sport (1) selon la revendication 1, **caractérisée en ce que** la décoration (8) est placée sur un support (7) et **en ce qu'**un moyen adhésif léger est disposé entre le support (7) de la décoration (8) et la première couche (10).

3. Chaussure de sport (1) selon la revendication 2, **caractérisée en ce que** le support (7) est le moyen adhésif.

4. Chaussure de sport (1) selon la revendication 3, **caractérisée en ce que** le support (7) est une feuille, un vemis ou une encre de polyuréthane.

5. Chaussure de sport (1) selon la revendication 2, **caractérisée en ce que** le support (7) est une feuille métallique.

6. Chaussure de sport (1) selon la revendication 2, **caractérisée en ce que** le moyen adhésif consiste en au moins un téton de la première couche (10) de la chaussure pour accrocher le support (7).

7. Chaussure de sport (1) selon la revendication 2, **caractérisée en ce que** le support (7) de décoration (8) est un autocollant.

8. Chaussure de sport (1) selon la revendication 2, **caractérisée en ce que** le support (7) de décoration est de type décalcomanie.

9. Chaussure de sport (1) selon l'une des revendications précédentes, **caractérisée en ce que** les deux couches de la partie de la chaussure sont en polyuréthane.

10. Chaussure de sport (1) selon l'une des revendications précédentes, **caractérisée en ce que** la chaussure est une chaussure de ski, la partie de la chaussure étant la coque (3) et la décoration (8) étant disposée sur les parties latérales de la coque.

11. Chaussure de sport selon l'une des revendications précédentes, **caractérisée en ce que** la décoration (8) est de type alphanumérique et/ou quadrichromique.

12. Chaussure de sport selon l'une des revendications précédentes, **caractérisée en ce que** la décoration (8) contient une information permettant la gestion de la chaussure de sport.

13. Chaussure de sport selon la revendication précédente, **caractérisée en ce que** la décoration comporte une partie de type code-barre pour contenir l'information.

14. Procédé de fabrication d'une chaussure de sport selon l'une des revendications précédentes, comprenant la fabrication d'une partie de la chaussure de type coque ou manchette par bi-injection de matériaux plastiques dont la combinaison permet de remplir une double fonction de rigidité et de confort, comprenant une étape intermédiaire consistant à réaliser une décoration (8) sur la surface de la partie obtenue après la première injection, cette décoration ne comportant pas des nervures de la première couche (10).

15. Procédé de fabrication d'une chaussure de sport selon la revendication précédente, **caractérisé en ce que** l'étape intermédiaire consiste à disposer un support (7) contenant une décoration (8) à l'aide d'un moyen adhésif sur la surface de la partie obtenue après la première injection, cette décoration (8) étant ensuite recouverte par un matériau transparent lors de la deuxième injection.

16. Procédé de fabrication d'une chaussure de sport selon la revendication précédente, **caractérisé en ce que** l'étape intermédiaire comprend une étape consistant à chauffer le support (7) pour obtenir l'adhésion du support (7), le support (7) étant alors le moyen adhésif.

17. Procédé de fabrication d'une chaussure de sport selon la revendication 15, **caractérisé en ce que** l'étape intermédiaire comprend une étape consistant à enlever une feuille du support (7) de décoration (8) afin d'obtenir l'effet adhésif du moyen adhésif.

18. Procédé de fabrication d'une chaussure de sport selon la revendication précédente, **caractérisé en ce que** l'étape intermédiaire consiste en une étape de collage d'un autocollant, le support (7) de décoration (8) étant un autocollant.

19. Partie de type coque (3) ou manchette (4) pour chaussure de sport (1) composée de deux couches (10, 11) de matériaux plastiques bi-injectés dont la combinaison permet de remplir une double fonction de rigidité et de confort de la partie, comprenant une décoration (8), cette décoration ne comportant pas des nervures de la première couche (10), disposée entre les deux couches (10, 11), la seconde couche (11) étant transparente afin de laisser visible la décoration et la recouvrant afïn de la protéger des agressions extérieures.

## Claims

1. A sports boot (1) comprising a part of shell (3) or cuff (4) type composed of two layers (10, 11) of bi-injected plastic materials, the combination of which fulfills a dual function of stiffness and comfort of the boot part, which comprises a decoration (8), this decoration (8) not comprising ribs on first layer (10), arranged between the two layers (10, 11), the second layer (11) being transparent in order to reveal the decoration and covering it in order to protect it from adverse external influences.

2. The sports boot (1) as claimed in claim 1, wherein the decoration (8) is placed on a support (7), and wherein a lightweight adhesive means is arranged between the support (7) of the decoration (8) and the first layer (10).

3. The sports boot (1) as claimed in claim 2, wherein the support (7) is the adhesive means.

4. The sports boot (1) as claimed in claim 3, wherein the support (7) is a sheet, a varnish or a polyurethane ink.

5. The sports boot (1) as claimed in claim 2, wherein the support (7) is a metallic foil.

6. The sports boot (1) as claimed in claim 2, wherein the adhesive means consists of at least one stud of the first layer (10) of the boot in order to attach the support (7).

7. The sports boot (1) as claimed in claim 2, wherein the support (7) of decoration (8) is a sticker.

8. The sports boot (1) as claimed in claim 2, wherein the decoration support (7) is of the decal type.

9. The sports boot (1) as claimed in one of previous claims, wherein the two layers of the boot part are made from polyurethane.

10. The sports boot (1) as claimed in one of previous claims, which boot is a ski boot, the boot part being the shell (3) and the decoration (8) being arranged on the lateral parts of the shell.

11. The sports boot as claimed in one of previous claims, wherein the decoration (8) is of the alphanumeric and/or four-color type.

12. The sports boot as claimed in one of previous claims, wherein the decoration (8) contains information for managing the sports boot.

13. The sports boot as claimed in claim 12, wherein the decoration includes a bar-code-type part for containing the information.

14. A method for manufacturing a sports boot as claimed in one of previous claims, which comprises the manufacture of part of the boot of shell or cuff type by a bi-injection of plastic materials, the combination of which fulfills a dual function of stiffness and comfort, which comprises an intermediate step consisting in producing a decoration (8) on the surface of the part obtained after the first injection, this decoration (8) not comprising ribs on first layer (10).

15. The method for manufacturing a sports boot as claimed in claim 14, wherein the intermediate step consists in providing a support (7), containing a decoration (8), with the aid of an adhesive means, on the surface of the part obtained after the first injection, this decoration (8) then being covered by a transparent material during the second injection.

16. The method for manufacturing a sports boot as claimed in claim 15, wherein the intermediate step comprises a step consisting in heating the support (7) in order to obtain adhesion of the support (7), the support (7) then being the adhesive means.

17. The method for manufacturing a sports boot as claimed in claim 15, wherein the intermediate step comprises a step consisting in removing a sheet from the support (7) of decoration (8) in order to obtain the adhesive effect of the adhesive means.

18. The method for manufacturing a sports boot as claimed in claim 17, wherein the intermediate step consists of a step of gluing on a sticker, the support (7) of decoration (8) being a sticker.

19. A shell (3) or cuff (4) type part for a sports boot (1) composed of two layers (10, 11) of bi-injected plastic materials, the combination of which fulfills a dual function of stiffness and comfort of the part, which comprises a decoration (8), this decoration (8) not comprising ribs on first layer (10), arranged between the two layers (10, 11), the second layer (11) being transparent in order to reveal the decoration and covering it in order to protect it from adverse external influences.

## Patentansprüche

1. Sportschuh (1) mit einem Schalenteil (3) oder Manschettenteil (4), das aus zwei Schichten (10, 11) aus zweifach verspritzten Kunststoffmaterialien zusammengesetzt ist, deren Kombination eine doppelte Funktion der Steifheit und Bequemlichkeit des Schuhteils zu erfüllen erlaubt, und mit einer Verzierung (8), welche keine Rippen der ersten Schicht (10) aufweist und zwischen den beiden Schichten (10, 11) angeordnet ist, wobei die zweite Schicht (11) transparent ist, damit die Verzierung sichtbar bleibt und überdeckt wird, um sie vor äusseren aggressiven Einflüssen zu schützen.

2. Sportschuh (1) nach Anspruch 1, **dadurch gekennzeichnet, dass** sich die Verzierung (8) auf einer Auflage (7) befindet und dass zwischen dieser Auflage (7) der Verzierung (8) und der ersten Schicht (10) ein leichtes Klebemittel angeordnet ist.

3. Sportschuh (1) nach Anspruch 2, **dadurch gekennzeichnet, dass** die Auflage (7) das Klebemittel ist.

4. Sportschuh (1) nach Anspruch 3, **dadurch gekennzeichnet, dass** die Auflage ein Folie, ein Lack oder eine Polyurethanfarbe ist.

5. Sportschuh (1) nach Anspruch 2, **dadurch gekennzeichnet, dass** die Auflage (7) eine metallische Folie ist.

6. Sportschuh (1) nach Anspruch 2, **dadurch gekennzeichnet, dass** das Klebemittel aus wenigstens einer Kuppe der ersten Schicht (10) des Schuhs besteht, um die Auflage (7) anzuhaken.

7. Sportschuh (1) nach Anspruch 2, **dadurch gekennzeichnet, dass** die Auflage (7) der Verzierung (8) selbstklebend ist.

8. Sportschuh (1) nach Anspruch 2, **dadurch gekennzeichnet, dass** die Auflage (7) der Verzierung ein Abziehbild ist.

9. Sportschuh (1) nach einem der vorangehenden Ansprüche, **dadurch gekennzeichnet, dass** die beiden Schichten des Schuhteils aus Polyurethan bestehen.

10. Sportschuh (1) nach einem der vorangehenden Ansprüche, **dadurch gekennzeichnet, dass** der Schuh ein Schischuh und das Schuhteil die Schale (3) ist und die Verzierung (8) auf den Seitenteilen der Schale angeordnet ist.

11. Sportschuh nach einem der vorangehenden Ansprüche, **dadurch gekennzeichnet, dass** die Verzierung (8) ein alphanumerischer Text und/oder vierfarbig ist.

12. Sportschuh nach einem der vorangehenden Ansprüche, **dadurch gekennzeichnet, dass** die Verzierung (8) eine Information enthält, welche die Verwaltung des Sportschuhs erlaubt.

13. Sportschuh nach dem vorangehenden Anspruch, **dadurch gekennzeichnet, dass** die Verzierung einen Strichcode aufweist, welcher die Information enthält.

14. Verfahren zur Herstellung eines Sportschuhs nach einem der vorangehenden Ansprüche, wonach ein Schuhteil vom Schalen- oder Manschettentyp durch Zweifachspritzung von Kunststoffmaterialien hergestellt wird, deren Kombination eine doppelte Funktion der Steifheit und des Komforts zu erfüllen erlaubt, und wonach ein Zwischenschritt durchgeführt wird, der darin besteht, eine Verzierung (8) auf der Oberfläche des nach dem ersten Spritzvorgang erhaltenen Teils aufzubringen, wobei diese Verzierung keine Rippen der erste Schicht (10) aufweist.

15. Verfahren zur Herstellung eines Sportschuhs nach dem vorangehenden Anspruch, **dadurch gekennzeichnet, dass** der Zwischenschritt darin besteht, dass eine Auflage (7), die eine Verzierung (8) enthält, mit Hilfe eines Klebemittels auf die Oberfläche des nach dem ersten Spritzvorgang erhaltenen Teils aufgebracht wird, und dass danach beim zweiten Spritzvorgang diese Verzierung (8) mit einem transparenten Material bedeckt wird.

16. Verfahren zur Herstellung eines Sportschuhs nach dem vorangehenden Anspruch, **dadurch gekennzeichnet, dass** der Zwischenschritt eine Erwärmung der Auflage (7) einschliesst, um deren Haftung zu erhalten, wobei dann die Auflage (7) das Klebemittel ist.

17. Verfahren zur Herstellung eines Sportschuhs nach Anspruch 15, **dadurch gekennzeichnet, dass** der Zwischenschritt das Abheben einer Folie der Auflage (7) der Verzierung (8) einschliesst, um die Klebewirkung des Klebemittels zu erhalten.

18. Verfahren zur Herstellung eines Sportschuhs nach dem vorangehenden Anspruch, **dadurch gekennzeichnet, dass** der Zwischenschritt im Kleben eines selbstklebenden Mittels besteht, wobei die Auflage (7) der Verzierung (8) ein selbstklebendes Mittel ist.

19. Schalenteil (3) oder Manschettenteil (4) für einen Sportschuh (1), welches aus zwei Schichten (10, 11) aus zweifach verspritzen Kunststoffmaterialien zusammengesetzt ist, deren Kombination eine doppelte Funktion der Steifheit und des Komforts des Teils zu erhalten erlaubt, wobei dieses Teil eine Verzierung (8) hat, welche keine Rippen der ersten Schicht (10) aufweist und zwischen den beiden Schichten (10, 11) angeordnet ist, und wobei die zweite Schicht (11) transparent ist, damit die Verzierung sichtbar bleibt und bedeckt wird, um sie vor äusseren aggressiven Einflüssen zu schützen.
